# EUROPÄISCHE PATENTSCHRIFT

(11) **EP 1 320 162 B1**
(45) Veröffentlichungstag und Bekanntmachung des Hinweises auf die Patenterteilung: **30.12.2015**
(21) Anmeldenummer: 02022007.5
(22) Anmeldetag: 01.10.2002
(51) Int. Cl.: H02G 3/12

(54) **Hohlwanddose aus Kunststoff**
Wall mounted plastic distribution box
Boîte de distribution en plastique montée au mur

(30) Priorität: 11.12.2001 DE 10160736
(43) Veröffentlichungstag der Anmeldung: 18.06.2003
(73) Patentinhaber: Kaiser GmbH & Co. KG, D-58579 Schalksmühle (DE)
(72) Erfinder: Viola, Marc, 58579 Schalksmühle (DE); Wangemann, Anke, 58579 Schalksmühle (DE); Schlöter, Reinhard, 58566 Kierspe (DE)
(74) Vertreter: Köchling, Conrad-Joachim

(56) Entgegenhaltungen:
- EP-A- 1 014 523
- DE-A- 2 526 853
- DE-A- 4 222 042

## Beschreibung

Die Erfindung betrifft eine Hohlwanddose aus Kunststoff für elektrotechnische Installationen, die von vorn in den Durchbruch einer Wand einsetzbar ist, wobei die Hohlwanddose einen Einstecktiefenbegrenzungs-Kragen zum bündigen Einsetzen in den Durchbruch sowie umfangsseitig Halteflächen oder -kanten zum Zusammenwirken mit der Lochlaibung des Durchbruches in der Wand aufweist, sowie einen die Hohlwanddose abschließenden Boden, wobei die Hohlwanddose als in der Draufsicht ovale Doppeldose mit einem Dosenkörper gebildet ist, der im Bereich des Kragens und der Halteflächen oder -kanten an seinen Längsenden halbkreisartig gerundet ist, wobei die beiden Halbkreisformen über gerade Ersatzseite 1a

Anschlussbereiche verbunden sind und der Kragen jeweils nur im Bereich der Halbkreisformen radial abragend vorgesehen ist.

Aus der DE 196 09 709 A1 ist eine Hohlwanddose bekannt. Solche Hohlwanddosen sind für elektrische Installationen, wie beispielsweise Schalter, Steckdosen oder dergleichen brauchbar. Diese Hohlwanddosen sind in einfacher Weise in den Durchbruch einer Hohlwand einsetzbar, indem ein kreisrunder Durchbruch in der Wand geschaffen wird, in den die im Querschnitt zylindrische Hohlwanddose einsetzbar ist.

Der Durchbruch wird randseitig mit einem Randversenker bearbeitet, so dass der an der Mündung der Hohlwanddose befindliche Einstecktiefenbegrenzungskragen versenkt in den Durchbruch eingesetzt ist und die Dose flächenbündig in dem Durchbruch angeordnet ist. Zur Fixierung der Hohlwanddose in dem Durchbruch sind üblicherweise Stellschrauben mit entsprechenden Haltegliedern außenseitig der Dose vorgesehen und an der Dose gehaltert, wobei die entsprechenden Schrauben von der Frontseite der Dose her zugänglich sind, um das Halteglied rückseitig gegen die Wandung neben dem Durchbruch anzupressen und so für sicheren Sitz der Hohlwanddose zu sorgen. Um eine weitgehende Luftdichtheit und Winddichtheit im Bereich der Anordnung der Hohlwanddose zu schaffen, ist bei der bekannten Hohlwanddose außenseitig ein Dichtkragen oder ein Dichtungskörper angeordnet, so dass die Hohlwanddose dicht in den entsprechenden Durchbruch oder dergleichen einsetzbar ist. Die Hohlwanddose selbst weist eine geschlossene Außenfläche und einen geschlossene Boden auf, in dem gegebenenfalls ausbrechbare, ausschneidbare oder ausstanzbare Durchbrüche zum Einführen von Kabeln oder dergleichen gesetzt werden können.

Sofern zwei Hohlwanddosen eng benachbart angeordnet werden sollen, können entsprechende Durchbrüche in der Wandung angeordnet sein, so dass zwei Hohlwanddosen unmittelbar nebeneinander angeordnet sein können. Ein Problem hierbei ist, dass bei sehr nahe benachbarten Dosen die Durchbrüche, in die die Hohlwanddosen einsetzbar sind, ineinander übergehen, so dass die Dichtfunktion in dem unmittelbar benachbarten Bereich der ineinander übergehenden Durchbrüche nicht oder nicht ausreichend gewährleistet ist. Zudem muss der Montierende darauf achten, dass beide Dosen exakt richtig und niveaugleich positioniert sind. Solche benachbarten Dosen können bodenseitig durch einen Kombinationsstutzen verbunden werden, so dass Leitungen von der einen Dose zur anderen geführt werden können.

Weiter ist aus der DE 42 22 042 eine Hohlwanddose gattungsgemäßer Art bekannt. Diese weist lediglich an ihrem unterhalb des Flansches gebildeten gerundeten Bereich eine Abdichtung gegenüber dem Wandungsdurchbruch auf. Im Bereich der parallelen Verbindungswände zwischen den etwa halbkreisförmigen Bereichen der Dose erfolgt keinerlei Abdichtung gegenüber der Lochlaibung. Somit ist in diesem Bereich keine Winddichtigkeit erreicht.

Ausgehend von diesem Stand der Technik liegt der Erfindung die Aufgabe zugrunde, eine Hohlwanddose zu schaffen, die als Ersatz für eine Doppelanordnung von einzelnen Hohlwanddosen geeignet ist und bei der eine weitgehend winddichte Anordnung in einem entsprechenden Wandungsdurchbruch ermöglicht ist.

Zur Lösung dieser Aufgabe wird vorgeschlagen, dass die Halteflächen oder -kanten durch einen die Halbkreisform und die geraden Anschlussbereiche unterbrechungsfrei umgebenden radial abragenden Flächenbereich oder Kantenbereich in Form von Dichtkanten gebildet sind.

Dadurch, dass die Hohlwanddose als ovale Doppeldose ausgebildet ist, ist diese einerseits beispielsweise zur Aufnahme von zwei nebeneinander angeordneten Schaltern, Steckdosen oder dergleichen geeignet, die in üblicher Weise mittels Tragringen an der Hohlwanddose befestigt werden können. Zur Installation der Hohlwanddose in einem Durchbruch einer Wandung ist es lediglich erforderlich, zwei kreisrunde Durchbrüche in der Wandung vorzusehen, deren Mittelachsen voneinander einen Abstand aufweisen, die dem Abstand der Mittelachsen der Teilkreise der Doppeldose entsprechen. Der zwischen diesen Bohrungen stehen bleibende Zwickel kann in einfacher Weise manuell oder mittels eines Werkzeuges entfernt werden, so dass der entsprechende Durchbruch ebenfalls oval ausgebildet ist und die Halbkreise des ovalen Wandungsdurchbruches tangential in einen geraden Übergangsbereich übergehen. In eine solche Ausnehmung kann die ovale Doppeldose eingesetzt werden, so dass die Doppeldose den entsprechenden Wandungsdurchbruch weitestgehend winddicht durchgreift.

Die Halteflächen oder -kanten sind durch einen die Halbkreisform und die geraden Anschlussbereiche unterbrechungsfrei umgebenden radial abragenden Flächenbereich oder Kantenbereich gebildet.

Dabei weist die Doppeldose einen Dosenkörper auf, der mindestens mündungsnah an seinen Längsenden halbkreisartig gerundet ist, so dass die Endbereiche durch zylindrische Teilbereiche in Halbkreisform gebildet sind, die über gerade Anschlussbereiche verbunden sind, die ebenfalls parallel zur Lochlaibung gerichtete Erstreckung aufweisen. Diese Bereiche sollen mindestens eine derartige Höhe aufweisen, dass der Bereich sich über die gesamte Höhe der Lochlaibung erstreckt. Ob und in wie weit die Dose jenseits der Lochlaibung verjüngt ist oder andere Form aufweist, ist für den weiteren Sachverhalt nicht entscheidend. Es ist lediglich wichtig, dass die Dose im unmittelbaren Durchgriffsbereich der Lochlaibung dieser angepasste Form und Höhe aufweist. Dabei weisen die halbkreisförmig gerundeten Teilbereiche an der Mündung der Dose radial nach außen abragende Kragen auf. Diese Kragen bilden die Einstecktiefenbegrenzungsanschläge, wobei die entsprechenden Aufnahmefreiräume für die Kragenteile wiederum durch einen Randversenker oder dergleichen geschaffen werden können, der beim Erzeugen der Kreisform der entsprechenden Ausnehmung bzw. des Durchbruches benutzt wird. In dem Bereich der die beiden Halbkreisformen geradlinig verbindenden Anschlussbereiche sind solche Kragen nicht vorgesehen, da die entsprechenden geraden Anschlussbereiche nicht in einfacher Weise mit einem Randversenker bearbeitet werden können. Aufgrund der gewählten Gestaltung ist es möglich, die entsprechende Hohlwanddose flächenbündig in die entsprechende Ausnehmung bzw. den Durchbruch der Wandung einzusetzen. Mit Abstand von der Mündung der Doppeldose ist umlaufend um die gesamte Dose eine Haltefläche oder Haltekante, beispielsweise in Form einer Rippe vorgesehen, die in der Einbausollsituation umlaufend an der Lochlaibung nahe des in Einsteckrichtung hinteren Endes der Lochlaibung anliegt, so dass eine dichte Anordnung der Doppeldose in der entsprechenden Ausnehmung gewährleistet ist.

Um die Winddichtigkeit der in der Ausnehmung oder in dem Durchbruch sitzenden Hohlwanddose noch zu verbessern, ist vorgesehen, dass mittig zwischen den beiden Halbkreisformen mindestens nahe der Mündung der Doppeldose eine Zwischenwand oder ein Zwischensteg einsetzbar ist, wobei bei eingesetztem Zwischensteg oder bei eingesetzter Zwischenwand die geraden Anschlussbereiche gegen die Lochlaibung des Durchbruches angedrückt sind.

Diese Hohlwanddosen werden üblicherweise aus Kunststoff geformt, wobei zwangsläufig die geraden Anschlussbereiche zwischen den Halbkreisformen der Ovalform geringfügig nach innen zur Dose eingezogen sind. Hierdurch können zwischen der Lochlaibung des Durchbruches der Wandung und den geraden Anschlussbereichen Windundichtigkeiten entstehen, was unerwünscht ist. Um diese zu vermeiden, ist im Bereich der geraden Anschlussbereiche, vorzugsweise mittig dieser Anschlussbereiche die entsprechende Zwischenwand oder der Zwischensteg eingesetzt, wobei die Zwischenwand oder der Zwischensteg so bemessen ist, dass sie bzw. er in der Position, in der sie bzw. er in die Hohlwanddose eingesetzt ist, die geraden Wandungsteile an die Lochlaibung des Durchbruches andrückt und diese aus der herstellungsmäßig leicht zu einander hingebogenen Form in eine parallele Ausrichtung verstellt. Hierdurch ist die Winddichtigkeit der Hohlwanddose erheblich verbessert.

Zur leichten Anordnung und Fixierung der Zwischenwand oder des Zwischensteges ist vorzugsweise vorgesehen, dass die Doppeldose innenliegend und einander gegenüberliegend im Bereich mittig zwischen den Halbkreisformen Einschubnuten aufweist, in die die Zwischenwand oder der Zwischensteg von der Dosenmündung her einschiebbar ist.

Zudem kann vorgesehen sein, dass die Zwischenwand in der in die Doppeldose eingesetzten Montagesolllage die beiden Installationsplätze der Doppeldose vollständig voneinander abtrennt.

Auf diese Weise ist eine Abtrennung der beiden Installationsplätze der Hohlwanddose ermöglicht, so dass eine sichere Trennung bei verschiedenen Spannungsarten an beiden Installationsplätzen ermöglicht ist.

Alternativ kann auch vorgesehen sein, dass zwischen der Zwischenwand und dem Boden der Doppeldose in Montagesolllage der Zwischenwand ein Installationsspalt zum Durchführen von elektrischen Leitungen oder dergleichen Installationsmitteln gebildet ist.

Die erfindungsgemäße Hohlwanddose ist nicht nur für die Installation von zwei üblichen Installationsgeräten brauchbar, sondern es ist auch möglich, in den einen Installationsraum beispielsweise ein Elektronikbauteil, einen Transformator, eine Schaltungsanordnung oder eine andere elektrische Anordnung unterzubringen, die nicht von außen zugänglich sein muss und die beispielsweise mit dem am anderen Installationsplatz angeordneten Installationsteil in Wirkverbindung steht. Hierbei ist es erforderlich, den Installationsplatz zu verdecken, in dem kein Installationsgerät wie beispielsweise Schalter oder Steckdose angeordnet ist.

Um die Abdeckung zu realisieren, wird vorgeschlagen, dass ein Halbdeckel vorgesehen ist, der in die Mündung der Doppeldose bündig einsetzbar ist und einen der beiden Installationsplätze überdeckt.

Der entsprechende Halbdeckel kann alternativ über einen der beiden Installationsplätze gesteckt werden, so dass dieser Installationsplatz abgedeckt ist. Bei der nachfolgenden Fertigstellung des Raumes, in dem diese Hohlwanddose angeordnet ist, kann der Halbdeckel übertapeziert werden oder in sonstiger Weise verkleidet werden.

Um einen sicheren Sitz des Halbdeckels in der Doppeldose zu erreichen, ist vorgesehen, dass der Halbdeckel in der Doppeldose rastend gehalten ist.

Die Anordnung von Rasten und Rastausnehmungen ist dabei vornehmlich in dem Bereich zwischen der Mündungskante und den als Dichtfläche oder Dichtkante dienenden Halteflächen oder Haltekanten vorgesehen, so dass die Winddichtigkeit der Dose insgesamt durch solche Ausnehmungen nicht beeinträchtigt wird.

Besonders bevorzugt ist vorgesehen, dass der Halbdeckel als wannenartiges Formteil mit einem Boden und vom Boden abragendem, umlaufendem Kragen ausgebildet ist, wobei der Deckel alternativ mit dem umlaufenden Kragen voraus in die Mündung der Doppeldose einsetzbar ist, so dass der Boden in der Mündungsebene der Doppeldose sitzt bzw. bündig mit dieser abschließt, oder mit dem Boden voraus in die Mündung einsetzbar ist, so dass der dem Boden abgewandte Rand des Kragens in der Mündungsebene der Doppeldose sitzt bzw. mit dieser bündig abschließt.

Bei einer solchen Ausbildung des Halbdeckels ist es einerseits möglich, den Halbdeckel so auf den einen der beiden Installationsplätze aufzubringen, dass der Boden in der Mündungsebene der Doppeldose sitzt. Bei dieser Installationsart ist es in einfacher Weise möglich, den Bereich, in dem der Halbdeckel sitzt, überzutapezieren oder in sonstiger Weise zu verkleiden.

Andererseits ist es auch möglich, den Halbdeckel mit dem Boden voraus in die Mündung der Hohlwanddose einzusetzen, so dass einer der beiden Installationsplätze abgedeckt ist, wobei der Boden dann hinter der Mündung zurückliegt. Auf diese Weise ist es möglich, Isoliermasse oder Putzmasse in den zwischen der Dosenmündung und dem Boden des Halbdeckels befindlichen Raum einzubringen, um eine Schallisolierung oder dergleichen zu erreichen. Nachfolgend kann dann auch diese Anordnung übertapeziert oder in sonstiger Weise verkleidet werden. Die Anordnung ist vorzugsweise in Kombination mit der Zwischenwand oder dergleichen so vorgesehen, dass der Halbdeckel zwar den einen Installationsplatz abdeckt, nicht aber die obere Stirnrandkante der Zwischenwand oder dergleichen, so dass die Zwischenwand auch bei in Sollposition befindlichem Halbdeckel entnommen werden kann bzw. eingesteckt werden kann. Dies ist vor allem dann hilfreich und nützlich, wenn das unterhalb des Halbdeckels befindliche Element ausgetauscht oder die Installation geändert werden soll. Es ist dann möglich, die Zwischenwand oder dergleichen herauszuziehen, ohne dass der Halbdeckel entfernt wird, so dass dann das unter dem Halbdeckel befindliche Installationsteil aus der freien Installationsöffnung entnommen werden kann, um gegebenenfalls Aktivierungsarbeiten an dem Elektronikgerät oder Wartungsarbeiten oder Austauscharbeiten vornehmen zu können. Zudem bildet die Zwischenwand in diesem Fall noch eine Stütze für den Halbdeckel, der unverschieblich zwischen Zwischenwand und dem umgebenden Mündungsrand des einen Installationsplatzes der Doppeldose angeordnet ist.

Zusätzlich kann vorgesehen sein, dass der Kragen des Halbdeckels durch Stützstege versteift ist.

Ein Ausführungsbeispiel der Erfindung ist in der Zeichnung dargestellt und im Folgenden näher beschrieben.
Es zeigt:
- Figur 1: eine erfindungsgemäße Hohlwanddose in Ansicht;
- Figur 2: die Dose in gleicher Ansicht mit umgekehrt angeordnetem Halbdeckel;
- Figur 3: die Dose gemäß Figur 2 in der Sollmontagelage des Halbdeckels.

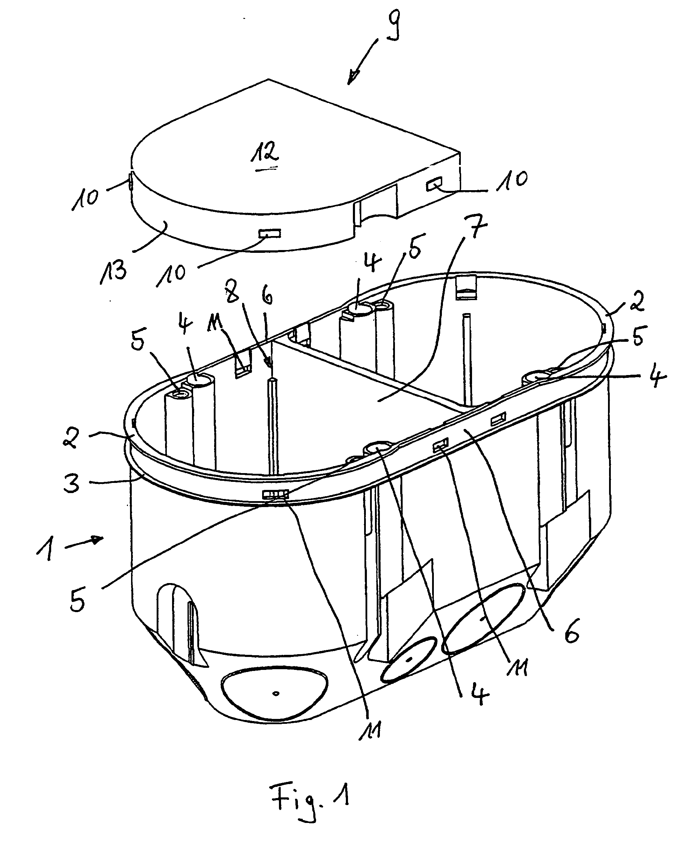

In der Zeichnung ist eine Hohlwanddose 1 gezeigt, die aus Kunststoff geformt ist und für elektrotechnische Installationen dient. Eine solche Hohlwanddose 1 ist in an sich bekannter Weise von vorn her in den Durchbruch einer Wandung eines Hohlwandbereiches einsetzbar. Hierzu weist zur Positionierung die Hohlwanddose einen Einstecktiefenbegrenzungskragen 2 auf, so dass die Hohlwanddose bündig in den entsprechenden Wandungsdurchbruch einsetzbar ist, indem die Ausnehmung des Durchbruches durch ein rotierendes Element erzeugt wird und der Rand der Ausnehmung durch einen Randversenker bearbeitet wird. Hierdurch ist es möglich, den Kragen 2 flächenbündig in die Wand einzubringen, in der der Durchbruch erzeugt ist. Des Weiteren sind umfangsseitig der Hohlwanddose 1 Halteflächen oder Haltekanten 3 vorgesehen, die mit der Lochlaibung des entsprechenden Durchbruches der Wand als Dichtkanten zusammenwirken und einen luftdichten Sitz der Dose in dem Wandungsdurchbruch ermöglichen. Die Hohlwanddose 1 ist lediglich mündungsseitig (in Figur 1 oben) offen, während die Wandungen und der Boden der Dose geschlossen sind. Im Boden der Dose können beispielsweise ausschneidbare Bereiche vorgesehen sein, um Kabel oder dergleichen in die Dose einführen zu können. Des weiteren sind am Außenmantel der Dose 1 Einrichtungen 4 vorgesehen, in die Befestigungsschrauben samt Halteelementen eingebracht werden können, um die Dose an der Hohlwandung verspannen zu können. Solche Einrichtungen sind in der Zeichnung nicht dargestellt. Sie sind aber üblich und bekannt.

Beispielsweise sind solche Einrichtungen in der DE 196 09 709 A1 gezeigt. Weiterhin sind innenseitig der Dose 1 Anordnungen 5 vorgesehen, an denen Tragringe von Installationsgeräteträgern oder dergleichen mittels Schrauben befestigt werden können.

Die Hohlwanddose 1 ist insgesamt in der Draufsicht als ovale Doppeldose ausgebildet. Die Doppeldose ist durch einen Dosenkörper gebildet, der mindestens in dem Bereich, in dem der Kragen 2 und die Haltefläche oder Haltekante 3 bzw. Dichtkante angeordnet ist, an den Längsenden halbkreisartig gerundet ist, wobei die beiden Halbkreisformen über gerade Anschlussbereiche 6 verbunden sind. Der Kragen 2 ist jeweils nur im Bereich der Halbkreisformen radial nach außen abragend vorgesehen. Die Halteflächen oder Dichtkanten 3 sind durch einen die Halbkreisform und die geraden Anschlussbereiche 6 unterbrechungsfrei umgebenden radial abkragenden Flächenbereich oder Kantenbereich gebildet. Die Breite des Bereiches zwischen den Teilen 2 und 3 ist gleich oder größer als die Dicke der Wandung, in welcher der Durchbruch zur Aufnahme der Hohlwanddose 1 eingebracht ist, so dass einerseits der Kragen 2 bündig in der Fläche der Wandung liegt und andererseits die Dichtkante 3 noch im Eingriffsbereich der Lochlaibung ist.

Mittig zwischen den beiden Halbkreisformen ist in die Hohlwanddose 1 eine Zwischenwand 7 eingesetzt, wobei durch die eingesetzte Zwischenwand 7 die geraden Anschlussbereiche 6 in der Montagesolllage gegen die Lochlaibung des Durchbruches der Wandung angedrückt sind. Die Hohlwanddose 1 weist innenliegend und einander gegenüberliegend im Bereich mittig zwischen den Halbkreisformen, also im Bereich der geraden Anschlussbereiche 6, Einschubnuten 8 auf, in welche die Zwischenwand 7 von der Dosenmündung her einschiebbar ist. Je nach Ausbildung der Zwischenwand 7 kann diese in der in die Doppeldose eingesetzten Montagesolllage die beiden Installationsplätze der Doppeldose vollständig voneinander abtrennen oder auch einen Installationsspalt zum Durchführen von elektrischen Leitungen oder dergleichen aufweisen.

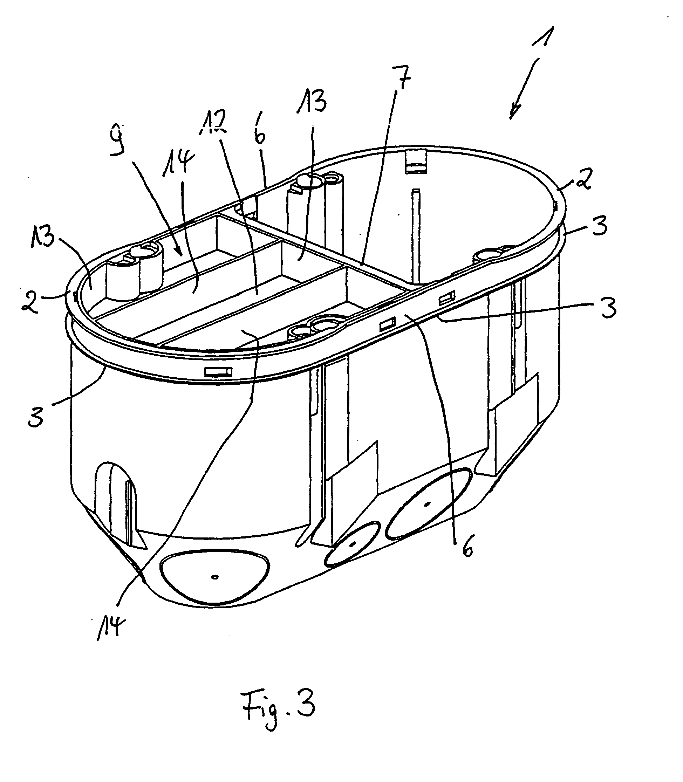

Eine besondere Weiterbildung der Hohlwanddose 1 sieht vor, dass ein Halbdeckel 9 vorgesehen ist, der in die Mündung der als Doppeldose ausgebildeten Hohlwanddose 1 bündig einsetzbar ist, wie dies beispielsweise anhand von Figur 3 verdeutlicht ist, so dass einer der beiden Installationsplätze überdeckt ist. Der Halbdeckel 9 kann dazu Rastvorsprünge 10 aufweisen, die in Rastausnehmungen 11 in der Installationssolllage eingreifen. Die Rastausnehmungen 11 sind dabei in einem Bereich zwischen dem Kragen 2 und der Dichtkante 3 vorgesehen, so dass die Winddichtheit der Dose durch diese Ausnehmungen nicht beeinträchtigt wird.

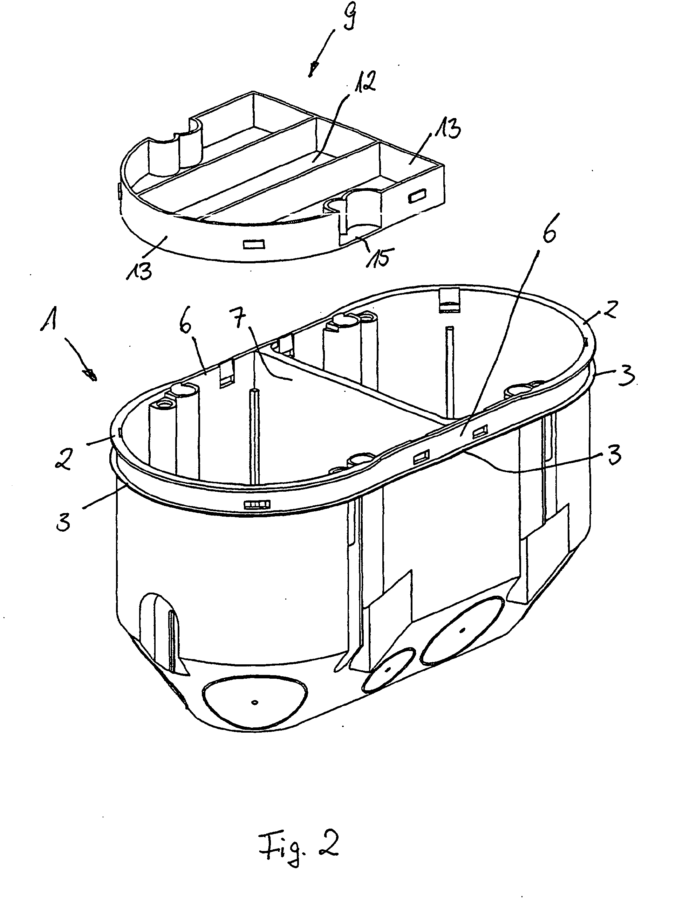

Der Halbdeckel 9 ist als wannenartiges Formteil mit einem Boden 12 und vom Boden abragendem, umlaufendem Kragen 13 ausgebildet, wobei der Halbdeckel 9 mit dem umlaufenden Kragen 13 voraus in die Mündung der Doppeldose einsetzbar ist, wie dies in Figur 1 veranschaulicht ist, so dass der Boden 12 in der Sollmontagelage in der Mündungsebene der Doppeldose sitzt und bündig mit dieser abschließt. Alternativ kann der Halbdeckel 9 auch mit dem Boden voraus in die Mündung der Hohlwanddose 1 eingesetzt werden, wie dies in Figur 2 und 3 verdeutlicht ist, so dass der dem Boden 12 abgewandte Rand des Kragens 13 in der Mündungsebene der Doppeldose sitzt bzw. mit dieser bündig abschließt. In der Montageart, wie sie in Figur 1 veranschaulicht ist, kann der durch den Halbdeckel 9 überdeckte Teil der Hohlwanddose in einfacher Weise übertapeziert oder in sonstiger Weise verkleidet werden. Bei der Anordnung gemäß Figur 2 und 3 ist es möglich, den durch den Halbdeckel 9 gebildeten Raum zwischen der Mündung der Hohlwanddose 1 und dem Boden 12 des Halbdeckels durch Isoliermasse oder dergleichen auszufüllen, um gegebenenfalls eine Schall- oder Wärmeisolierung zu erreichen, so dass das durch den Halbdeckel 9 abgedeckte Installationsgerät möglichst wenig Geräusche oder Wärme aus der Frontfläche der Hohlwanddose 1 abgeben kann. Anschließend kann die Ausgleichsmasse oder dergleichen, die in dem Hohlraum des Halbdeckels 9 angeordnet ist, übertapeziert oder in sonstiger Weise verkleidet werden.

Vorzugsweise ist der Kragen 13 des Halbdeckels 9 durch Stützstege 14 versteift. Der Halbdeckel 9 weist im Bereich der Anordnung der Funktionsteile 4 bzw. 5 der Hohlwanddose 1 randseitig Einwölbungen auf, so dass diese Bestandteile das Einsetzen des Deckels nicht stören. Dabei kann dieser Bereich durch eine entfernbare Materialschicht 15 abgedeckt sein, so dass je nach Installationsweise bei eingesetztem Halbdeckel 9 die Bestandteile 4 und 5 des überdeckten Installationsplatzes abgedeckt sind oder bei der Installationsweise nach Figur 2 und 3 einen Durchgriff für die Enden der Teile 4 und 5 geschaffen ist.

## Patentansprüche

1. Hohlwanddose aus Kunststoff für elektrotechnische Installationen, die von vorn in den Durchbruch einer Wand einsetzbar ist, wobei die Hohlwanddose (1) einen Einstecktiefenbegrenzungs-Kragen (2) zum bündigen Einsetzen in den Durchbruch sowie umfangsseitig Halteflächen oder -kanten (3) zum Zusammenwirken mit der Lochlaibung des Durchbruches in der Wand aufweist, sowie einen die Hohlwanddose (1) abschließenden Boden, wobei die Hohlwanddose (1) als in der Draufsicht ovale Doppeldose ausgebildet ist, wobei die Doppeldose durch einen Dosenkörper gebildet ist, der mindestens im Bereich des Kragens (2) und der Halteflächen oder -kanten (3) an seinen Längsenden halbkreisartig gerundet ist, wobei die beiden Halbkreisformen über gerade Anschlussbereiche (6) verbunden sind und
der Kragen (2) jeweils nur im Bereich der Halbkreisformen radial abragend vorgesehen ist, **dadurch gekennzeichnet, dass** die Halteflächen oder -kanten (3) durch einen die Halbkreisform und die geraden Anschlussbereiche (6) unterbrechnungsfrei umgebenden radial abragenden Flächenbereich oder Kantenbereich in Form von Dichtkanten gebildet sind.

2. Hohlwanddose nach Anspruch 1, **dadurch gekennzeichnet, dass** mittig zwischen den beiden Halbkreisformen mindestens nahe der Mündung der Doppeldose eine Zwischenwand (7) oder ein Zwischensteg einsetzbar ist, wobei bei eingesetztem Zwischensteg oder bei eingesetzter Zwischenwand (7) die geraden Anschlussbereiche (6) gegen die Lochlaibung des Durchbruches angedrückt sind.

3. Hohlwanddose nach Anspruch 2, **dadurch gekennzeichnet, dass** die Doppeldose innenliegend und einander gegenüberliegend im Bereich mittig zwischen den Halbkreisformen Einschubnuten (8) aufweist, in die die Zwischenwand (7) oder der Zwischensteg von der Dosenmündung her einschiebbar ist.

4. Hohlwanddose nach Anspruch 2 oder 3, **dadurch gekennzeichnet, dass** die Zwischenwand (7) in der in die Doppeldose eingesetzten Montagesolllage die beiden Installationsplätze der Doppeldose vollständig voneinander abtrennt.

5. Hohlwanddose nach Anspruch 2 oder 3, **dadurch gekennzeichnet, dass** zwischen der Zwischenwand (7) und dem Boden der Doppeldose in Montagesolllage der Zwischenwand (7) ein Installationsspalt zum Durchführen von elektrischen Leitungen oder dergleichen Installationsmitteln gebildet ist.

6. Hohlwanddose nach einem der Ansprüche 1 bis 5, **dadurch gekennzeichnet, dass** mindestens ein Halbdeckel (9) vorgesehen ist, der in die Mündung der Doppeldose bündig einsetzbar ist und einen der beiden Installationsplätze überdeckt.

7. Hohlwanddose nach Anspruch 6, **dadurch gekennzeichnet, dass** der Halbdeckel (9) in der Doppeldose rastend gehalten ist.

8. Hohlwanddose nach Anspruch 6 oder 7, **dadurch gekennzeichnet, dass** der Halbdeckel (9) als wannenartiges Formteil mit einem Boden (12) und vom Boden (12) abragendem, umlaufendem Kragen (13)ausgebildet ist, wobei der Deckel (9) alternativ mit dem umlaufenden Kragen (13) voraus in die Mündung der Doppeldose einsetzbar ist, so dass der Boden (12) in der Mündungsebene der Doppeldose sitzt bzw. bündig mit dieser abschließt, oder mit dem Boden (12) voraus in die Mündung einsetzbar ist, so dass der dem Boden (12) abgewandte Rand des Kragens (13) in der Mündungsebene der Doppeldose sitzt bzw. mit dieser bündig abschließt.

9. Hohlwanddose nach Anspruch 8, **dadurch gekennzeichnet, dass** der Kragen (13) des Halbdeckels (9) durch Stützstege (14) versteift ist.

## Claims

1. A wall mounted plastic distribution box for electrical installations, which can be inserted from the front into a passage of a wall, the wall mounted distribution box (1) including a collar (2) for limiting the insertion depth for flush insertion into the passage and circumferentially retaining surfaces or edges (3) for co-operating with the inner surface of the passage in the wall, and a bottom closing off the wall mounted distribution box (1), the wall mounted distribution box (1) being configured, when viewed in plan, as an oval double-box, the double-box being formed by a box body that at least in the area of the collar (2) and the retaining surfaces or edges (3) is rounded at its longitudinal ends in a semi-circular shape, the two semi-circular sections being connected by straight connection sections (6), and the collar (2) being radially protruding in the area of the semi-circular sections only, **characterized by that** the retaining surfaces or edges (3) are formed by a radially protruding area section or edge section surrounding the semi-circular section and the straight connection sections (6) without interruptions in the form of sealing edges.

2. The wall mounted plastic distribution box according to claim 1, **characterized by that** centrally between the two semi-circular sections at least close to the upper end of the double-box, a middle wall (7) or an intermediate web can be inserted, with inserted intermediate web or with inserted middle wall (7), the straight connection sections (6) being pressed against the inner surface of the passage.

3. The wall mounted plastic distribution box according to claim 2, **characterized by that** the double-box has on its inside mutually opposite insertion grooves (8) in the area centrally between the semi-circular sections, into which the middle wall (7) or the intermediate web can be inserted from the upper end of the box.

4. The wall mounted plastic distribution box according to claim 2 or 3, **characterized by that** the middle wall (7) in the intended mounting position, when inserted into the double-box, completely separates from each other the two installation places of the double-box.

5. The wall mounted plastic distribution box according to claim 2 or 3, **characterized by that** between the middle wall (7) and the bottom of the double-box, in the intended mounting position of the middle wall (7), an installation gap for passing electrical cables or the like installation means is formed.

6. The wall mounted plastic distribution box according to one of claims 1 to 5, **characterized by that** at least a half-lid (9) is provided that can be inserted flush into the upper end of the double-box and covers one of the two installation places.

7. The wall mounted plastic distribution box according to claim 6, **characterized by that** the half-lid (9) is held in a snapped-in manner in the double-box.

8. The wall mounted plastic distribution box according to claim 6 or 7, **characterized by that** the half-lid (9) is formed as a tub-like shaped part with a bottom (12) and a circumferential collar (13) protruding from the bottom (12), the lid (9) alternatively being insertable with the circumferential collar (13) in front into the upper end of the double-box, so that the bottom (12) is located in the plane of the upper end of the double-box or closes off flush with the latter, or with the bottom (12) in front into the upper end, so that the edge of the collar (13) facing away from the bottom (12) is located in the plane of the upper end of the double-box or closes off flush with the latter.

9. The wall mounted plastic distribution box according to claim 8, **characterized by** that the collar (13) of the half-lid (9) is reinforced by support webs (14).

## Revendications

1. Boîte de distribution en plastique montée au mur pour des installations électriques, qui peut être insérée de l'avant dans une orifice d'un mur, la boîte de distribution (1) montée au mur comportant une collerette (2) limitant la profondeur d'insertion pour l'insertion fleurée dans l'orifice et périphériquement des surfaces ou arêtes de retenue (3) pour coopérer avec la surface intérieure de l'orifice dans le mur, et un fond renfermant la boîte de distribution (1) montée au mur, la boîte de distribution (1) montée au mur étant réalisée, vue en plan, comme une boîte double ovale, la boîte double étant formée par un corps de boîte qui au moins dans la zone de la collerette (2) et des surfaces ou arêtes de retenue (3) est arrondi à ses extrémités longitudinales en une forme semi-circulaire, les deux sections semi-circulaires étant liées par des sections de liage (6) rectilignes, et la collerette (2) faisant radialement saillie seulement dans la zone des sections semi-circulaires, **caractérisée en ce que** les surfaces ou arêtes de retenue (3) sont formées par une section de surface ou d'arête radialement en saillie entourant la section semi-circulaire et les sections de liage (6) rectilignes sans discontinuité sous la forme d'arêtes d'étanchéité.

2. Boîte de distribution montée au mur selon la revendication 1, **caractérisée en ce que** centralement entre les deux sections semi-circulaires au moins près de l'extrémité supérieure de la boîte double, une paroi intermédiaire (7) ou une entretoise intermédiaire peut être insérée, et si l'entretoise intermédiaire ou la paroi intermédiaire (7) est insérée, les sections de liage (6) rectilignes sont poussées contre la surface intérieure de l'orifice.

3. Boîte de distribution montée au mur selon la revendication 2, **caractérisée en ce que** la boîte double a sur son côté intérieur des rainures d'insertion (8) opposées dans la zone centralement entre les sections semi-circulaires, dans lesquelles la paroi intermédiaire (7) ou l'entretoise intermédiaire peut être insérée à partir de l'extrémité supérieure de la boîte.

4. Boîte de distribution montée au mur selon la revendication 2 ou 3, **caractérisée en ce que** la paroi intermédiaire (7) dans la position de montage de consigne, si insérée dans la boîte double, sépare complètement l'une de l'autre les deux positions d'installation de la boîte double.

5. Boîte de distribution montée au mur selon la revendication 2 ou 3, **caractérisée en ce qu**'entre la paroi intermédiaire (7) et le fond de la boîte double, dans la position de montage de consigne de la paroi intermédiaire (7), une fente d'installation pour le passage de câbles électriques ou semblables moyens d'installation est réalisée.

6. Boîte de distribution montée au mur selon une des revendications 1 à 5, **caractérisée en ce qu**'au moins un demi-couvercle (9) est prévu qui peut être inséré à fleur dans l'extrémité supérieure de la boîte double et recouvre une des deux positions d'installation.

7. Boîte de distribution montée au mur selon la revendication 6, **caractérisée en ce que** le demi-couvercle (9) est maintenu par encliquetage dans la boîte double.

8. Boîte de distribution montée au mur selon la revendication 6 ou 7, **caractérisée en ce que** le demi-couvercle (9) est réalisé comme une pièce moulée en forme de cuve avec un fond (12) et une collerette (13) périphérique étant en saillie du fond (12), le couvercle (9) pouvant être inséré alternativement avec la collerette (13) périphérique vers le front dans l'extrémité supérieure de la boîte double, de façon que le fond (12) soit positionné dans le plan de l'extrémité supérieure de la boîte double ou soit à fleur avec celle-ci, ou pouvant être inséré avec le fond (12) vers le front dans l'extrémité supérieure, de façon que l'arête de la collerette (13) à l'opposé du fond (12) soit positionnée dans le plan de l'extrémité supérieure de la boîte double ou soit à fleur avec celle-ci.

9. Boîte de distribution montée au mur selon la revendication 8, **caractérisée en ce que** la collerette (13) du demi-couvercle (9) est renforcée par des entretoises d'appui (14).
